# EUROPEAN PATENT APPLICATION

(11) **EP 4 563 952 A1**
(43) Date of publication of application: **04.06.2025**
(21) Application number: 23761620.6
(22) Date of filing: 19.07.2023
(51) Int. Cl.: G01G 19/414

(54) **MODULAR TRANSPORT SYSTEM FOR AT LEAST ONE OBJECT AND RELATED COMPUTER IMPLEMENTED WEIGHING METHOD**

(30) Priority: 25.07.2022 PT 2022118127
(71) Applicant: Calugaru, Natalia, 2440-090 Batalha (PT)
(72) Inventor: Calugaru, Natalia, 2440-090 Batalha (PT)
(74) Representative: Monteiro Alves, Inês
(86) International application number: PCT/PT2023/050021
(87) International publication number: WO 2024/025430

(57) **Abstract**

The present invention refers to a modular transport system for an object comprising a base frame (1), a first side frame (2), a second side frame (3), a back frame (4) and at least one removable basket (5), supported on a first side support element (6), and optionally including at least one transport handle (12). The invention is further related to a computer implemented weighing method accommodated in the removable basket (5), in a computerized weighing system.

The modular system is transportable by a user of a sales establishment and the removable basket (5) is used to accommodate objects, allowing the weighing thereof, without the need for packaging, since an identifier element (7) is incorporated in the removable basket (5), which allows the tare weight of said basket to be identified in a computer implemented method for weighing objects.

## Description

### TECHNICAL DOMAIN

The present invention refers to modular transport systems for at least one object comprising at least one standard removable basket to be used in the commercialization and transport of bulk products, which are configured to be used in a computer implemented method for weighing objects to be accommodated in a standard container incorporated in said modular transport systems.

### PRIOR ART AND PROBLEMS OF THE PRIOR ART

The sale of bulk products in stores, markets and commercial centers is usually carried out with the use of plastic bags or other types of packaging, wherein the users or purchasers insert the products to be acquired in the referred packaging, so that they are weighed to determine the sales price of the product. This common practice leads to the use of large quantities of packaging for bulk products, which are necessary merely for weighing and transport of the product. Naturally, this excessive use of packaging for weighing the products, such as fruits and vegetables, results in significant environmental impacts, considering the excessive use of packaging, which many times is not adequately recycled, resulting in increase in environmental pollution and waste of raw materials.

### SOLUTION OF THE PROBLEM

The present invention solves the problems of the state of the art by means of the development of a modular transport system for at least one object which has structural elements that allow same to be easily transported by a user of a store, a market, or a commercial center, and which has at least one removable basket, which presents dimensions, a storage capacity, and a standard mass. In this manner, the removable basket can be used to accommodate objects sold in bulk and allows weighing same at the sales point, without the need for the use of packaging for this purpose, since an identifier element is incorporated in the removable basket, which allows the tare weights of said basket to be identified in a computer implemented method for weighing objects inserted in said basket. The removable basket can further be used for subsequent arrangement or storage of the product or object to be accommodated, since it has suitable characteristics for the conservation thereof.

### ADVANTAGEOUS EFFECTS OF THE INVENTION

The use of removable baskets inserted in the modular transport system for at least one object allows a user not to need to use specific packaging to store products sold in bulk. In this context, the removable basket itself is used as packaging for weighing and transport of the product, eliminating the use of packaging during the sale of bulk products and contributing to the reduction of environmental impacts resulting from the use of specific packaging for weighing objects sold in bulk.

The removable basket used in the modular transport system can be airtight or not, according to the need of the object to be transported.

The concept of the invention can further be extrapolated for processes for production of products which undergo bulk handling of raw materials and in a small relative scale, since the modular transport system for at least one object including removable baskets can be easily transported along a manufacturing area and the handling and weighing of raw materials in bulk can be carried out with the help of said removable baskets in the context of the computer implemented method for weighing of at least one object accommodated in a standard container in a computerized weighing system in accordance with the invention.

### BRIEF DESCRIPTION OF THE FIGURES

With the purpose of promoting an understanding of the principles in accordance with the embodiments of the present invention, reference will be made to the embodiments illustrated in the figures and the terminology used to describe them. In any case, it must be understood that there is no intention of limiting the scope of the present invention to the figures. Any subsequent alterations or modifications of the inventive characteristics herein illustrated, as well as any additional applications of the principles and embodiments of the illustrated invention, which could normally occur to a person skilled in the art having this description, are considered as being within the scope of the claimed invention.
Figure 1 - illustrates a first embodiment of the modular transport system for at least one object;
Figure 2 - illustrates a second embodiment of the modular transport system for at least one object;
Figure 3 - illustrates a third embodiment of the modular transport system for at least one object with a plurality of standard containers;
Figure 4 - illustrates a fourth embodiment of the modular transport system for at least one object with a plurality of standard containers;
Figure 5 - illustrates a fifth embodiment of the modular transport system for at least one object with a plurality of standard containers;
Figure 6 - illustrates a sixth embodiment of the modular transport system for at least one object with a plurality of standard containers;
Figure 7 - illustrates an embodiment of a standard container;
Figure 8 - illustrates an embodiment of a fitting between a standard container and the frames of the modular transport system;
Figure 9 - illustrates a second embodiment of a standard container;
Figure 10 - illustrates a first embodiment of a system used in the method according to the invention;
Figure 11 - illustrates a second embodiment of a system used in the method according to the invention;
Figure 12 - illustrates a third embodiment of a system used in the method according to the invention;
Figure 13 - illustrates a sixth embodiment of the modular transport system for at least one object with a plurality of standard containers;
Figure 14 - illustrates a seventh embodiment of the modular transport system for at least one object with a plurality of standard containers.

### DESCRIPTION OF THE EMBODIMENTS

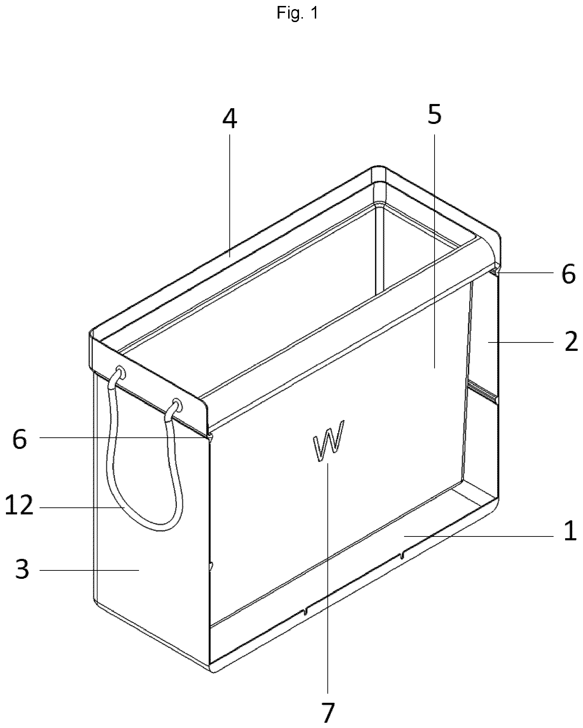

The present invention refers, in a first aspect, illustrated in Figure 1, to a modular transport system for at least one object comprising one transport unit, which comprises:
a base frame (1); and
a first side frame (2); and
a second side frame (3); and
a back frame (4); wherein said modular transport system for at least one object additionally comprises:
   at least one removable basket (5); wherein
   the first side frame (2), the second side frame (3) and the back frame (4) are connected to the base frame (1); and wherein
   the first side frame (2) and the second side frame (3) are connected to the back frame (4); and wherein
   the removable basket (5) is supported on first elements of the side support (6), which are arranged on the inner faces of said first side frame (2) and second side frame (3); and wherein
   the removable basket (5) comprises at least one identifier element (7); and wherein the identifier element (7) is arranged on at least one of the external faces of said removable basket (5) and comprises an information associated to the mass of said removable basket (5).

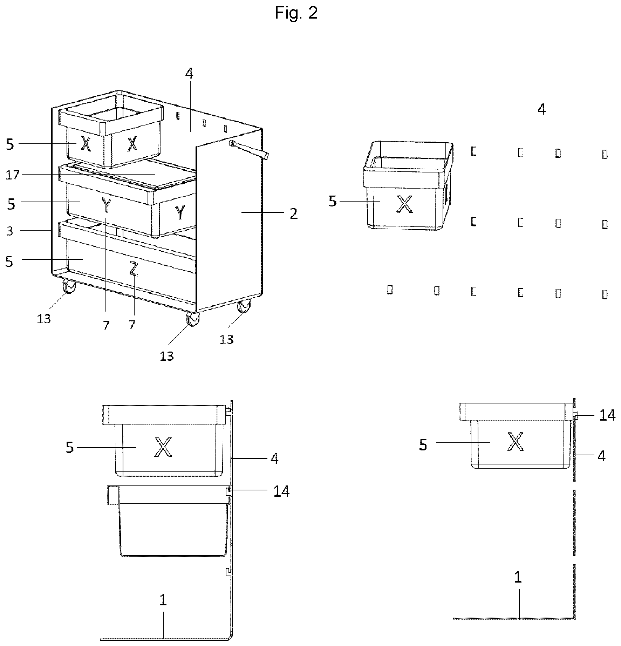

The present invention refers, in a second aspect, illustrated in Figure 2, to a modular transport system for at least one object comprising one transport unit, which comprises:
a base frame (1); and
a first side frame (2); and
a second side frame (3); and
a back frame (4); wherein said modular transport system for at least one object additionally comprises:
   at least one removable basket (5); wherein
   the first side frame (2), the second side frame (3) and the back frame (4) are connected to the base frame (1); and wherein
   the first side frame (2) and the second side frame (3) are connected to the back frame (4); and wherein
   the removable basket (5) is supported on back support elements (14), which are arranged on the inner face of said back frame (4); and wherein
   the removable basket (5) comprises at least one identifier element (7); and wherein the identifier element (7) is arranged on at least one of the external faces of said removable basket (5) and comprises an information associated to the mass of said removable basket (5).

In the preferred embodiments of the present invention, as illustrated in Figure 2, the back support elements (14) can be hooks connected to a back edge of the removable basket (5), wherein the hooks are inserted in orifices placed on the back frame (4). Alternatively, the back support elements (14) can be hooks connected to the back frame (4) wherein the hooks are inserted in orifices placed on the back face of the removable basket (5).

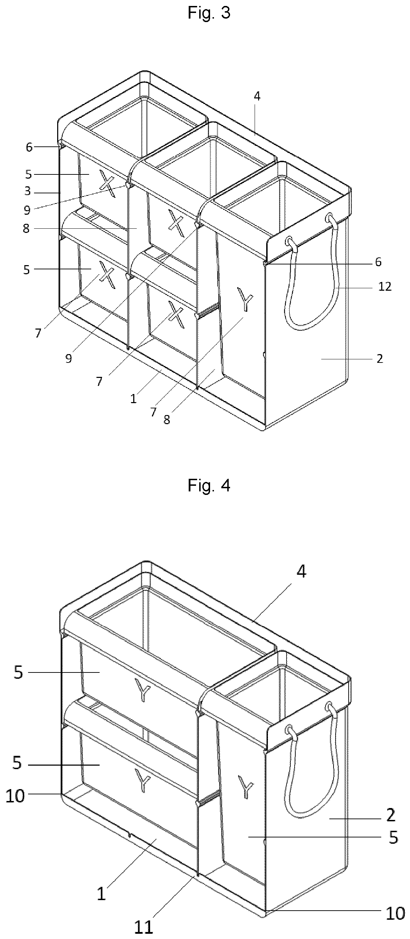

In the preferred embodiments of the present invention, as illustrated in Figure 3, the transport unit comprises at least one intermediate frame (8), which is connected to the base frame (1) and to the back frame (4); and wherein the intermediate frame (8) comprises second side support elements (9) arranged on the external faces thereof; and wherein at least one removable basket (5) is supported on second side support elements (9).

As illustrated in Figures 3, 4 and 5, the modular transport system can comprise a plurality of removable baskets (5) which can have diverse dimensions, to accommodate different amounts of objects. Additionally, as illustrated in said figures, a lower edge of the intermediate frame (8) can be connected to the base frame (1) by means of the removable fitting of said lower edge arranged on the upper face of said base frame (1). Additionally, in the transport unit, at least one element of the group consisting of a lower edge of the first side frame (2), a lower edge of the second side frame (3) and a lower edge of the back frame (4) can be connected to the base frame (1) by means of the removable fitting of said lower edge on a rail for removable fitting placed on the upper face of said base frame (1). In this manner, the first side frame (2), the second side frame (3), the back frame (4) and the intermediate frames (8) can be disconnected from the base frame (1) to dismantle the modular transport system, which can be particularly advantageous for reducing the dimensions of said system for the commercialization thereof.

In the preferred embodiments of the present invention, the plurality of removable baskets (5), as illustrated in Figures 3, 4 and 5, can be arranged in the form of a plurality of removable baskets (5) arranged in columns and/or lines, relative to the first side frame (2) and the second side frame (3).

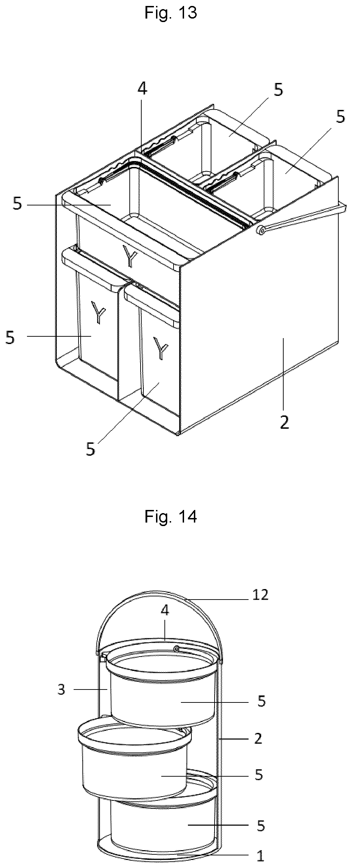

In other preferred embodiments of the present invention, as illustrated in Figure 13, a first set of removable baskets (5) is arranged on the front face of the back frame (4) and a second set of removable baskets (5) is arranged on the front face of the back frame (4), wherein said front frame (4) is orthogonally connected and in an intermediate position relative to the first side frame (2) and the second side frame (3). Even more preferably, each one of the first set of removable baskets (5) and the second set of removable baskets (5) can be arranged in columns and/or lines, relative to the first side frame (2) and the second side frame (3).

As illustrated in Figure 2, the modular transport system can comprise a plurality of casters (13), which are connected to the lower face of said base frame (1) on said transport unit.

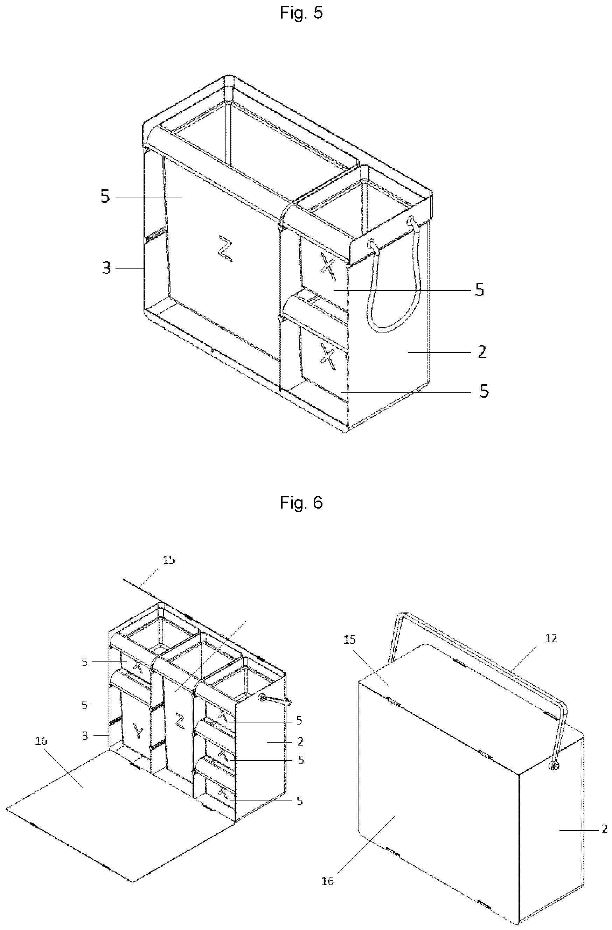

In another preferred embodiment of the present invention, as illustrated in Figure 6, the transport unit includes a folding lid (15), which is connected to the upper edge of the back frame (4). Said connection can be made by at least one pivoting element, for example a hinge.

In another preferred embodiment of the present invention the modular transport system includes a lid (17) connected to the removable basket (5), as illustrated in Figure 2, whereby said lid (17) can optionally include at least one orifice.

In another preferred embodiment of the present invention, as illustrated in Figure 6, the transport unit includes a folding front wall (16), which is connected to the front edge of the base frame (1). Said connection can be made by at least one pivoting element, for example, a hinge.

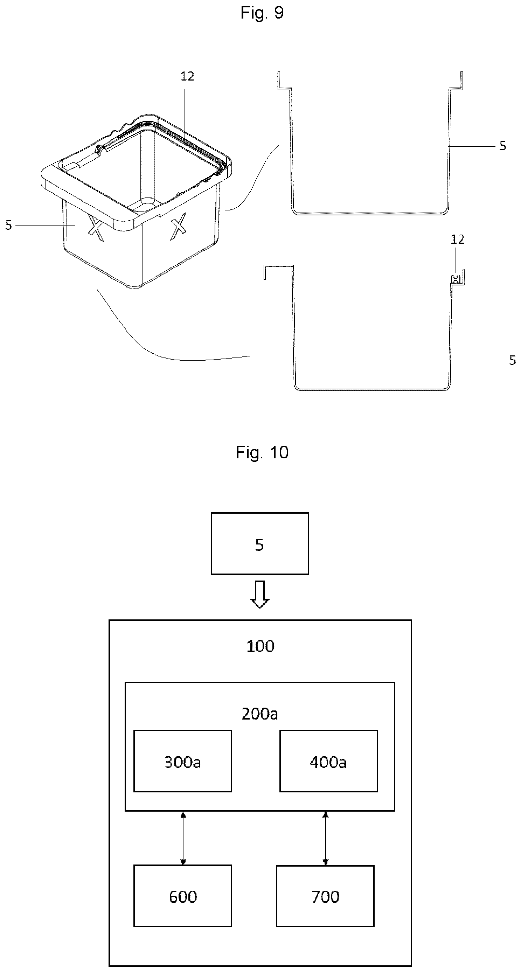

In another preferred embodiment of the present invention, as illustrated in Figures 1, 3, 6 and 9, the modular transport system includes a handle for transport (12) which is connected to at least one element of the group consisting of the first side frame (2), the second side frame (3), the back frame (4), the removable basket (5), the folding lid (15) and the folding front wall (16). Even more preferably, as illustrated in Figures 1, 3 and 6, the transport unit includes a transport handle (12), which is connected to at least one element of the group consisting of the first side frame (2) and the second side frame (3). As illustrated in Figures 9 and 13, the removable basket (5) can also include a transport handle (12). The transport handle can be made from a flexible material, or it can be made from a rigid material with pivoting movement relative to the element to which it is connected. As will be appreciated by a person skilled in the art, the transport handle (12) made from flexible material can further include telescopic structural elements, to facilitate the movement of the system according to the invention by a user.

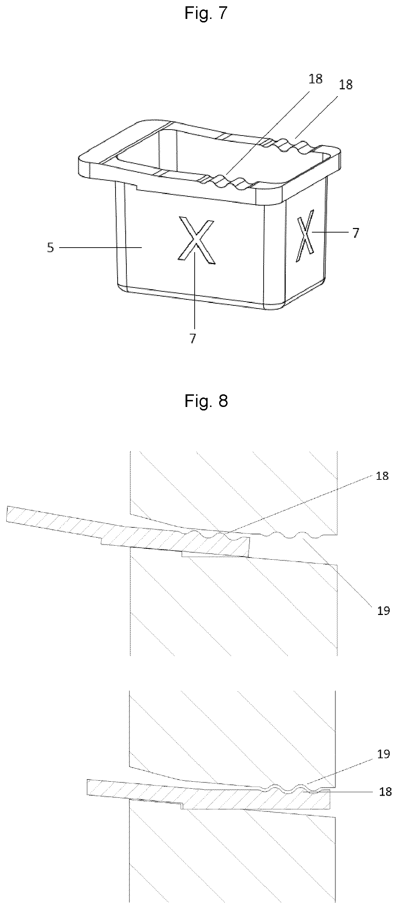

Preferably, the modular transport system comprises a locking subsystem which locks the removable basket (5) to at least one element of the transport unit selected from the group consisting of the first side frame (2), the second side frame (3) and the intermediate frame (8), to avoid the undesirable sliding of the removable basket (5) of the transport system. Even more preferably, as illustrated in Figure 8, said subsystem includes a first sequence of grooves and protuberances (18) arranged on the front side edges of the removable basket 5), which are configured to be fitted into a second sequence of grooves and protuberances (19) arranged on the front lower edge of at least one element selected from the group consisting of the first side support element (6) and the second side support element (9). Even more preferably, the first side support element (6) and second side support element (9) form rails arranged respectively on the first side frame (2), on the second side frame (3) and on the intermediate frame (8), wherein the rails have a descending angle toward the front portions of the first side frame (2), the second side frame (3) and the intermediate frame (8) to facilitate the insertion of the side edges of the removable basket (5) in said rails and the fitting between the first sequence of grooves and protuberances (18) and the second sequence of grooves and protuberances (19).

In other embodiments of the present invention, as illustrated in Figure 9, the removable basket (5) has an inverted "U" shaped front edge, which allows the user to easily remove the removable basket (5) with their fingers from the modular transport system for at least one object. Alternatively, a handle can be incorporated on the front face of said removable basket (5) for the same purpose.

In other embodiments of the present invention, as illustrated in Figure 9, the removable basket (5) has side edges with side protuberances, which are configured to be supported on the first side support elements (6) and/or second side support elements (8).

In other embodiments of the present invention, the base frame (1), the first side frame (2), the second side frame (3) and the back frame (4) present flat shapes and have square or rectangular configurations, as illustrated in Figures 1 to 4.

In other embodiments of the present invention, the base frame (1) can present a circular or elliptical shape and the first side frame (2), the second side frame (3) and the back frame (4) present semicircular shapes or with arched segments, as illustrated in Figure 14. In this embodiment, the removable baskets (5) present a circular or elliptical shape in their horizontal straight section, so as to adequately connect to the support structure.

Preferably, the base frame (1), the first side frame (2), the second side frame (3) and the back frame (4) are configured in the shape of plates, as illustrated in Figures 1 to 4 and 14. As will be fully understood by a person skilled in the art, the base frame (1), the first side frame (2), the second side frame (3) and the back frame (4) can additionally be configured in the shape of lattices, to economize construction raw materials and increase the mechanical resistance of the modular transport system according to the invention.

In another preferred embodiment of the present invention, the identifier element (7) attributed to the removable basket (5) is at least one of the group consisting of a one-dimensional digital marker, a two-dimensional digital marker, an RFID tag, a graphic sign or a character. Even more preferably, the one-dimensional digital marker is a barcode. As illustrated in Figures 1 to 7 and 13, the identifier elements are identified with the "X", "Y", "Z" and "W", so as to illustrate several types of representations of said identifier element (7), wherein each representation is attributed to a tare weight of the removable basket (5). Alternatively, the two-dimensional digital marker can be selected from the group consisting of an AR code for augmented reality, an Aztec code, a 16K code, a CRONTO code, a Dotcode, a Data Matrix, a JAB-Code, a MaxiCode, a PDF417, a PEQRC and a QR Code. Alternatively, the graphic sign or character is fixed to the surface of the removable basket (5) by means of a technique selected from the group consisting in embossing, engraving in low relief or the fixation of a printed tag with the graphic sign or the character.

Thus, the removable basket (5) can be used for weighing edible products sold in bulk, such as fruits, vegetables, meat, and cereals.

In other preferred embodiments of the present invention, the removable basket (5) includes a lower compartment for accommodating ice, or it is configured for the fixation of ice packs, by means of support elements, arranged in said removable basket (5), to adequately preserve perishable edible foods, namely from the effect of the exposure to higher temperatures. The ice pack support elements can be arranged on the upper and/or lower part of the removable basket (5).

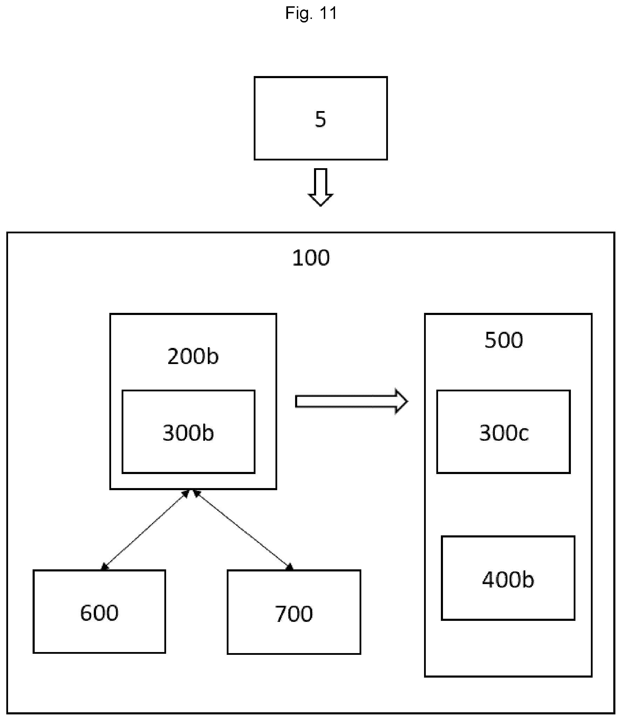

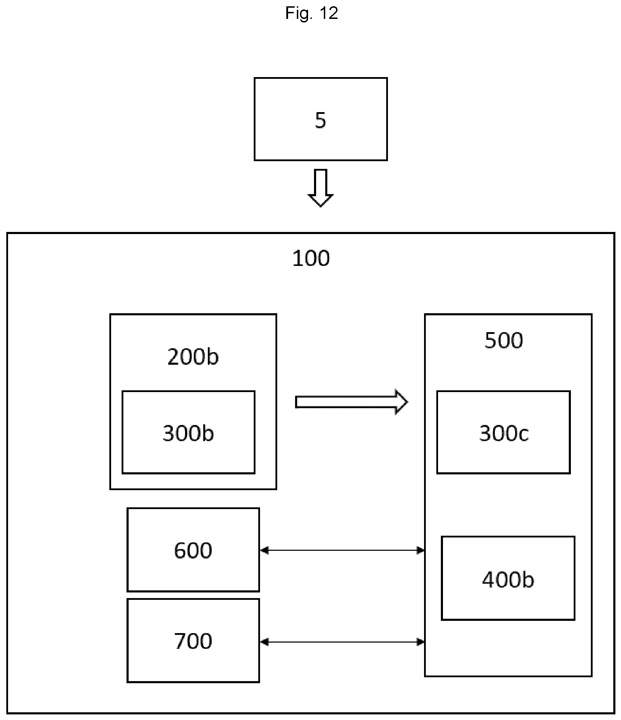

The present invention is related, in a third aspect, to a computer implemented method for weighing at least one object stored in a standard container in a computerized weighing system (100), wherein the computerized weighing system (100) comprises a first electronic weighing device (200a) with a first computer processing unit (300a) and a first data bank (400a), as illustrated in Figure 10, or a second electronic weighing device (200b) with a second computer processing unit (300b) in communication with a computing device (500) comprising a third computer processing unit (300c) and a second data bank (400b), as illustrated in Figures 11 and 12, wherein the method comprises the following steps:
a. availability of at least one removable basket (5) which is included in the modular transport system for at least one object, as defined in any of the previous claims, and having a standard storage and weight capacity;
b. allocation of an identifier element (7) to said removable basket (5), wherein said identifier element (7) comprises an information associated to the mass of said removable basket (5), which corresponds to a tare weight of the removable basket (5);
c. registration of the information comprised in said identifier element (7) of the removable basket (5) in a databank selected from the group consisting of a first databank (400a) and a second databank (400b), by means of a computer processing unit selected from the group consisting of the first computer processing unit (300a), the second computer processing unit (300b) and the third computer processing unit (300c);
d. registration of the information related to the specifications of said object in said databank identified in the previous step, by means of the referred computer processing unit, identified in the previous step;
e. identification of the information comprised in the identifier element (7) allocated to the removable basket (5);
f. identification of the object stored in the removable basket (5);
g. positioning of the removable basket (5) comprising at least one object within it in an electronic weighing device selected from the group consisting of a first electronic weighing device (200a) and the second electronic weighing device (200b) and identification of the total mass of the removable basket (5) comprising at least one object within it;
h. processing of the information comprised in the identifier element (7) allocated to the removable basket (5) by a computer processing unit selected from the group consisting of a first computer processing unit (300a), a second computer processing unit (300b) and the third computer processing unit (300c);
i. calculation of the mass of the at least one object stored within the removable basket (5) by the computer processing unit identified in the previous step, wherein the calculation refers to the subtraction of the mass of the removable basket (5) from the total mass of the removable basket (5) comprising at least one object within it;
   wherein the steps c) and d) can be executed in any order combination between said steps; and
   wherein the steps e), f) and g) can be executed in any order combination between said steps;
   wherein the steps c), d), h) and i) are executed by the first computer processing unit (300a) or by the third computer processing unit (300c).

In the preferred embodiments of the method according to the invention, the computerized weighing system (100) comprises at least one additional element selected from the group consisting in a reading unit (600) or a printer (700), wherein each referred additional element communicates with at least one element selected from the group consisting of a first electronic weighing device (200a), the second electronic weighing device (200b), or the computing device (500), as illustrated in Figures 11 of 12.

Preferably, the computerized weighing system (100) comprises the second electronic weighing device (200b) in communication with the computing device (500) and the communication between both being carried out by a wireless or wired communication network. Even more preferably, the communication between the second electronic weighing device (200b) and the computing device (500) is made by means of a communication network, which includes at least one network selected from the group consisting of a public network, an interconnected set of public and/or private networks, such as the internet, and a private network. As will be appreciated by a person skilled in the art, the wireless communication being carried out by means of at least one communication means selected from the group consisting of Bluetooth, Wi-Fi, and a mobile phone network.

In the preferred embodiments of the method according to the invention, the steps c), d), h) and i) are executed by a third computer processing unit (300c) comprised within the computing device (500).

In the preferred embodiments of the method according to the invention, at least one specification of the object to be accommodated in the removable basket (5) is selected from the group consisting of the identity of the object, a lot, a validity, and a cost per mass unit.

In the preferred embodiments of the method according to the invention, step g) occurs prior to steps e) and f).

In the preferred embodiments of the method according to the invention, this further comprises the step of calculation of the cost corresponding to the mass of the at least one object comprised within the removable basket (5) by a computer processing unit selected from the group consisting of the first computer processing unit (300a), the second computer processing unit (300b) and the third computer processing unit (300c), based on the recording of the related information with the specifications of the referred object in a databank selected from the group consisting of a first databank (400a), and the second databank (400b).

In the preferred embodiments of the method according to the invention, this further comprises a printing step by the printer (700) of a tag comprising at least one specification of the object accommodated within the removable basket (5), wherein the specification is selected from the group consisting of the identity of the object, a lot, a validity, a cost per unit mass, a total mass of the object and a cost referring to the total mass of the object.

In the preferred embodiments of the method according to the invention, this further comprises a reading step by the reading unit (600) of the identifier element (7) allocated to the removable basket (5), wherein the reading unit (600) is configured to identify the identifier element (7) selected from the group consisting of the one-dimensional digital marker, the two-dimensional digital marker, the RFID tag, the graphic sign or the character.

As used throughout this patent application, the expression "or" is used in the inclusive sense instead of the exclusive sense, unless the exclusive sense is clearly defined in a specific situation. In this context, a sentence of the type "X uses A or B" must be interpreted as including all the inclusive pertinent combinations, for example "X uses A", "X uses B" and "X uses A and B".

As used throughout this patent application the indefinite article "one" must be generally interpreted as "one or more", and "one or more", unless the sense of a single modality is clearly defined in a specific situation.

As presented in this description, the expressions related to examples must be interpreted with the purpose of illustrating an example of something and not indicating a preference.

The subject matter described above is provided as an illustration of the present invention and must not be interpreted so as to limit same. The terminology used herein with the purpose of describing preferred embodiments of the present invention, must not be interpreted to limit the invention. As used in the specification, the definite and indefinite articles, in their singular form, aim at the interpretation of also including the plural forms, unless the context of the description indicates, explicitly, the contrary. It will be understood that the expressions "comprise" and "include", when used in this description, specify the presence of the characteristics, the elements, the components, the steps, and the related operations, however, they do not exclude the possibility of other characteristics, elements, components, steps, and operations also being contemplated.

All the alterations, providing that they do not modify the essential characteristics of the claims that follow, must be considered as being within the scope of protection of the present invention.

### LIST OF REFERENCE INDICATIONS

- 1.: A base frame
- 2.: A first side frame
- 3.: A second side frame
- 4.: A back frame
- 5.: A removable basket
- 6.: A first side support element
- 7.: An identifier element
- 8.: An intermediate frame
- 9.: A second side support element
- 10.: A rail for connection of a side frame
- 11.: A rail for connection of an intermediate frame
- 12.: A transport handle
- 13.: A carter
- 14.: A back support element
- 15.: A folding lid
- 16.: A folding front wall
- 17.: A lid
- 18.: A first sequence of grooves and protuberances
- 19.: A second sequence of grooves and protuberances
- 100.: A computerized weighing system
- 200a.: A first electronic weighing device
- 200b.: A second electronic weighing device
- 300a.: A first computer processing unit
- 300b.: A second computer processing unit
- 300c.: A third computer processing unit
- 400a.: A first databank
- 400b.: A second databank
- 500.: A computing device
- 600.: A reading unit
- 700.: A printer

## Claims

1. A modular transport system for at least one object **characterized by** comprising a transport unit comprising:
a base frame (1); and
a first side frame (2); and
a second side frame (3); and
a back frame (4); and by said modular transport system for at least one object additionally comprising:
at least one removable basket (5); wherein
the first side frame (2), the second side frame (3) and the back frame (4) are connected to the base frame (1); and wherein
the first side frame (2) and the second side frame (3) are connected to the back frame (4); and wherein
the removable basket (5) is supported on first side support elements (6), which are arranged on the inner faces of said first side frame (2) and second side frame (3); and wherein
the removable basket (5) comprises at least one identifier element (7); and wherein
the identifier element (7) is arranged on at least one of the external faces of said removable basket (5) and comprises an information associated to the mass of said removable basket (5).

2. A modular transport system for at least one object **characterized by** comprising a transport unit comprising:
a base frame (1); and
a first side frame (2); and
a second side frame (3); and
a back frame (4); and by said modular transport system for at least one object additionally comprising:
at least one removable basket (5); wherein
the first side frame (2), the second side frame (3) and the back frame (4) are connected to the base frame (1); and wherein
the first side frame (2) and the second side frame (3) are connected to the back frame (4); and wherein
the removable basket (5) is supported on back support elements (14), which are arranged on the inner face of said back frame (4); and wherein
the removable basket (5) comprises at least one identifier element (7); and wherein
the identifier element (7) is arranged on at least one of the external faces of said removable basket (5) and comprises an information associated to the mass of said removable basket (5).

3. The modular transport system for at least one object, according to any of the preceding claims, **characterized by** the transport unit comprising at least one intermediate frame (8), which is connected to the base frame (1) and to the back frame (4); and wherein the intermediate frame (8) comprises second side support elements (9), arranged on the external faces thereof; and wherein at least one removable basket (5) is supported on the second side support elements (9).

4. The modular transport system for at least one object, according to the preceding claim, **characterized by** a lower edge of the intermediate frame (8) being connected to the base frame (1) by means of the removable fitting of said lower edge on a rail for removable fitting placed on the upper face of said base frame (1).

5. The modular transport system for at least one object, according to any of the preceding claims, **characterized by,** in the transport unit, at least one element of the group consisting of a lower edge of the first side frame (2), a lower edge of the second side frame (3) and a lower edge of the back frame (4) being connected to the base frame (1) by means of the removable fitting of said lower edge on a rail for removable fitting arranged on the upper face of said base frame (1).

6. The modular transport system for at least one object, according to any of the preceding claims, **characterized by** a plurality of carters (13) being connected to the lower face of said base frame (1) of the referred transport unit.

7. The modular transport system for at least one object, according to any of the preceding claims, **characterized by** a folding lid (15) being connected to the upper edge of the back frame (4) of the referred transport unit.

8. The modular transport system for at least one object, according to any of the preceding claims, **characterized by** a lid (17) being connected to the removable basket (5).

9. The modular transport system for at least one object, according to any of the preceding claims, **characterized by** a folding front wall (16) being connected to the front edge of the base frame (1) of said transport unit.

10. The modular transport system for at least one object, according to any of the preceding claims, **characterized by,** in the transport unit, a transport handle (12) being connected to at least one element of the group consisting of the first side frame (2), the second side frame (3), the back frame (4), the removable basket (5), the folding lid (15) and the folding front wall (16).

11. The modular transport system for at least one object, according to any of the preceding claims, **characterized by** comprising a locking subsystem which locks the removable basket (5) to at least one element of the transport unit selected from the group consisting of the first side frame (2), the second side frame (3), and the intermediate frame (8), of said transport unit.

12. The modular transport system for at least one object, according to the preceding claim, **characterized by** said locking subsystem including a first sequence of grooves and protuberances (18) arranged on the front side edges of the removable basket 5), which are configured to be fitted into a second sequence of grooves and protuberances (19) arranged on the front lower edge of at least one element selected from the group consisting of the first side support element (6) and the second side support system (9).

13. The modular transport system for at least one object, according to any of the preceding claims, **characterized by** the identifier element (7) allocated to the removable basket (5) being at least one of the group consisting of a one-dimensional digital marker, a two-dimensional digital marker, an RFID tag, a graphic sign or a character.

14. The modular transport system for at least one object, according to any of the preceding claims, **characterized by** the removable basket (5) including a lower compartment for accommodating ice or being configured for the fixation of ice packs, by means of support elements, arranged in said removable basket (5).

15. A computer implemented method for weighing at least one object stored in a standard container in a computerized weighing system (100),
wherein the computerized weighing system (100) comprises a first electronic weighing device (200a) with a first computer processing unit (300a) and a first data bank (400a) or a second electronic weighing device (200b) with a second computer processing unit (300b) in communication with a computing device (500) comprising a third computer processing unit (300c) and a second data bank (400b),
wherein said method is **characterized by** comprising the following steps:
a. availability of at least one removable basket (5) which is included in the modular transport system for at least one object, as defined in any of the preceding claims, and having a standard storage and weight capacity;
b. allocation of an identifier element (7) to said removable basket (5), wherein said identifier element (7) comprises an information associated to the mass of said removable basket (5), which corresponds to a tare weight of the removable basket (5);
c. recording of the information comprised in said identifier element (7) of the removable basket (5) in a databank selected from the group consisting of a first databank (400a) and a second databank (400b), by means of a computer processing unit selected from the group consisting of the first computer processing unit (300a), the second computer processing unit (300b) and the third computer processing (300c);
d. registration of the information related to the specifications of said object in said databank identified in the previous step, by means of the referred computer processing unit, identified in the previous step;
e. identification of the information comprised in the identifier element (7) allocated to the removable basket (5);
f. identification of the object stored in the removable basket (5);
g. positioning of the removable basket (5) comprising at least one object within it in an electronic weighing device selected from the group consisting of the first electronic weighing device (200a) and the second electronic weighing device (200b) and identification of the total mass of the removable basket (5) comprising at least one object within it;
h. processing of the information comprised in the identifier element (7) allocated to the removable basket (5) by a computer processing unit selected from the group consisting of the first computer processing unit (300a), the second computer processing unit (300b) and the third computer processing unit (300c);
i. calculation of the mass of the at least one object stored within the removable basket (5) by the computer processing unit identified in the previous step, wherein the calculation refers to the subtraction of the mass of the removable basket (5) from the total mass of the removable basket (5) comprising at least one object within it;
wherein the steps c) and d) can be executed in any order combination between said steps; and
wherein the steps e), f) and g) can be executed in any order combination between said steps; and
wherein the steps c), d), h) and i) are executed by the first computer processing unit (300a) or by the third computer processing unit (300c).

16. The method, according to the preceding claim, **characterized by** the computerized weighing system (100) comprising at least one additional element selected from the group consisting in a reading unit (600) or a printer (700), wherein each referred additional element communicates with at least one element selected from the group consisting of the first electronic weighing device (200a), the second electronic weighing device (200b) or the computing device (500).

17. The method, according to claim 14 or 15, **characterized by** the computerized weighing system (100) comprising the second electronic weighing device (200b) in communication with the computing device (500) and the communication between both being carried out by a wireless or wired communication network.

18. The method, according to the preceding claim, **characterized by** the communication between the second electronic weighing device (200b) and the computing device (500) being made by means of a communication network, which includes at least one network selected from the group consisting of a public network, an interconnected set of public and/or private networks, such as the internet, and a private network.

19. The method, according to claim 16, **characterized by** the wireless communication being carried out by means of at least one communication means selected from the group consisting of Bluetooth, Wi-Fi, and a mobile phone network.

20. The method, according to any of claims 13 to 18, **characterized by** steps c), d), h) and i) being executed by a third computer processing unit (300c) comprised within the computing device (500).

21. The method, according to any of claims 13 to 19, **characterized by** the identifier element (7) allocated to said removable basket (5) being at least one of the group consisting of a one-dimensional digital marker, a two-dimensional digital marker, an RFID tag, a graphic sign or a character.

22. The method, according to the preceding claim, **characterized by** the one-dimensional digital marker being a barcode.

23. The method, according to claim 20, **characterized by** the two-dimensional digital marker being selected from the group consisting of an AR code for augmented reality, an Aztec code, a 16K code, a CRONTO code, a Dotcode, a Data Matrix, a JAB-Code, a MaxiCode, a PDF417, a PEQRC and a QR Code.

24. The method, according to claim 20, **characterized by** the graphic sign or the character being fixed to the surface of the removable basket (5) by means of a technique selected from the group consisting in embossing, engraving in low relief or the fixation of a printed tag with the graphic sign or the character.

25. The method, according to any of claims 13 to 23, **characterized by** at least one specification of the object being selected from the group consisting of the identity of the object, a lot, a validity, and a cost per mass unit.

26. The method, according to any of claims 13 to 24, **characterized by** step g) occurring prior to steps e) and f).

27. The method, according to any of claims 13 to 25, **characterized by** further comprising the step of calculation of the cost corresponding to the mass of the at least one object comprised within the removable basket (5) by a computer processing unit selected from the group consisting of the first computer processing unit (300a), the second computer processing unit (300b) and the third computer processing unit (300c), based on the recording of the related information with the specifications of the referred object in a databank selected from the group consisting of the first databank (400a), and the second databank (400b).

28. The method, according to any of claims 14 to 26, **characterized by** further comprising a printing step by the printer (700) of a tag comprising at least one specification of the object accommodated within the removable basket (5), wherein the specification is selected from the group consisting of the identity of the object, a lot, a validity, a cost per unit mass, a total mass of the object and a cost referring to the total mass of the object.

29. The method, according to any of claims 14 and 15 to 27, **characterized by** further comprising a reading step by the reading unit (600) of the identifier element (700) allocated to the removable basket (5), wherein the reading unit (600) is configured to identify the identifier element (7) selected from the group consisting of a one-dimensional digital marker, the two-dimensional digital marker, the RFID tag, the graphic sign or the character.
